# EUROPEAN PATENT APPLICATION

(11) **EP 4 075 850 A1**
(43) Date of publication of application: **19.10.2022**
(21) Application number: 19955829.7
(22) Date of filing: 09.12.2019
(51) Int. Cl.: H04W 16/28, H04W 36/08, H04W 36/32, H04W 36/36, H04W 4/40

(54) **TERMINAL AND WIRELESS COMMUNICATION METHOD**

(71) Applicant: NTT DOCOMO, INC., Chiyoda-ku Tokyo 100-6150 (JP)
(72) Inventor: MATSUMURA, Yuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2019/048140
(87) International publication number: WO 2021/117108

(57) **Abstract**

A terminal according to one aspect of the present disclosure includes a receiving section that receives at least one of information related to a type of one or more transmission points installed in a movement path and information related to a transmit beam transmitted from the one or more transmission points, and a control section that controls reception of DL transmission transmitted from each of the one or more transmission points, based on the information being received.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), in order to implement radio communication in a moving object (for example, a train or the like) that moves at a high speed, using beams transmitted from transmission points (for example, Remote Radio Heads (RRHs)) installed in a path of the moving object is assumed.

However, how to control radio communication in the moving object by using the beams transmitted from each of the transmission points has not yet been fully studied.

In view of this, the present disclosure has one object to provide a terminal and a radio communication method that can appropriately control radio communication in a moving object.

### Solution to Problem

A terminal according to one aspect of the present disclosure includes: a receiving section that receives at least one of information related to a type of one or more transmission points installed in a movement path and information related to a transmit beam transmitted from the one or more transmission points; and a control section that controls reception of DL transmission transmitted from each of the one or more transmission points, based on the information being received. Advantageous Effects of Invention

According to one aspect of the present disclosure, radio communication in a moving object can be appropriately controlled.

### Brief Description of Drawings

FIG. 1A and FIG. 1B are each a diagram to show an example of communication between a moving object and transmission points (for example, RRHs);
FIG. 2A and FIG. 2B are each a diagram to show an example of communication control according to a first aspect;
FIG. 3 is a diagram to show an example of order of beam transition according to a second aspect;
FIG. 4 is a diagram to show an example of beam transition time (dwell time) according to the second aspect;
FIG. 5A and FIG. 5B are each a diagram to show an example of control of beam transition according to the second aspect;
FIG. 6 is a diagram to show an example of beam control according to a third aspect;
FIG. 7 is a diagram to show another example of beam control according to the third aspect;
FIG. 8 is a diagram to show an example of a schematic structure of a radio communication system according to one embodiment;
FIG. 9 is a diagram to show an example of a structure of a base station according to one embodiment;
FIG. 10 is a diagram to show an example of a structure of a user terminal according to one embodiment; and
FIG. 11 is a diagram to show an example of a hardware structure of the base station and the user terminal according to one embodiment.

### Description of Embodiments

### (HTS)

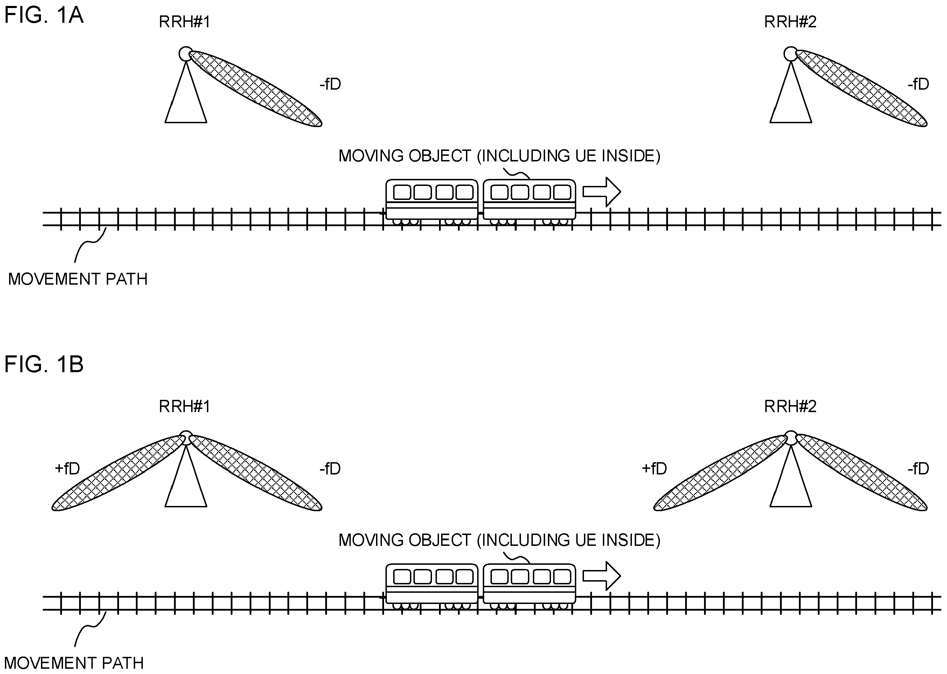

In NR, in order to perform communication with a terminal (hereinafter also referred to as a UE) included in a moving object (HTS (high speed train) that moves at a high speed, such as a train, using beams transmitted from transmission points (for example, RRHs) is assumed. In an existing system (for example, Rel. 15), performing communication with the moving object by transmitting uni-directional beams from the RRHs is supported (see FIG. 1A).

FIG. 1A shows a case in which RRHs are installed along a movement path (or a moving direction, a traveling direction, traveling path) of the moving object, and a beam is formed from each RRH on the traveling direction side of the moving object. The RRH that forms the uni-directional beam may be referred to as a uni-directional RRH.

In the example shown in FIG. 1A, the moving object receives a negative Doppler shift (-f_{D}) from each RRH.

Note that, here, a case in which a beam is formed on the traveling direction side of the moving object is shown. However, this is not restrictive, and a beam may be formed on an opposite direction side to the traveling direction.

In Rel. 16 and later versions, it is also assumed that a plurality (for example, two or more) of beams are transmitted from the RRHs. For example, it is assumed that the beams are formed in both of the traveling direction of the moving object and the direction opposite to the traveling direction (see FIG. 1B).

FIG. 1B shows a case in which the RRHs are installed along the movement path of the moving object, and beams are formed from each RRH on both of the traveling direction side of the moving object and the opposite direction side to the traveling direction. The RRH that forms the beams of the plurality of directions (for example, two directions) may be referred to as a bi-directional RRH.

In the example shown in FIG. 1B, when the moving object is located between two RRHs (here, RRH #1 and RRH #2), a signal subjected to a negative Doppler shift switches to a signal subjected to a positive Doppler shift having higher power. In this case, the maximum variation width of the Doppler shift that requires correction is a change from -fD to +f_{D}, which is doubled as compared to the case of the uni-directional RRH. With this, a processing load of correction or the like performed by the moving object (for example, a terminal or the like included in the moving object) may increase.

It is assumed that, when the moving object moves at a high speed, appropriately performing beam control and control of handover and the like is difficult.

The beam control of existing systems (for example, Rel. 15 or earlier versions) is, for example, performed in procedures of L1-RSRP report, beam report (TCI state, spatial relation configuration, or activation), and determination of a receive beam; however, whether the series of procedures can be performed in a short passing period is a problem.

The handover control is, for example, performed in procedures of measurement report (L3-RSRP, L3-SINR report), handover indication, random access channel transmission, and RRC connection complete; however, whether the series of procedures can be performed in a short passing period is a problem.

The inventors of the present invention focused on that the uni-directional RRH is in some cases enabled even when the bi-directional RRH is supported, and studied communication control of a moving object (or a UE included in the moving object) and an RRH and came up with the idea of the present embodiment.

Embodiments according to the present disclosure will be described in detail below with reference to the drawings. The configuration described in aspects of each of the embodiments may be applied individually, or may be applied in combination.

A TCI state, a TCI state or a QCL assumption, a QCL assumption, a QCL parameter, a spatial domain reception filter, a UE spatial domain reception filter, a spatial domain filter, a UE receive beam, a DL receive beam, DL precoding, a DL precoder, a DL-RS, a QCL parameter followed by a DMRS port, an RS of the QCL type D of a TCI state or a QCL assumption, and an RS of the QCL type A of a TCI state or a QCL assumption may be interchangeably interpreted as each other. An RS of the QCL type D, a DL-RS associated with the QCL type D, a DL-RS having the QCL type D, a source of the DL-RS, an SSB, and a CSI-RS may be interchangeably interpreted as each other.

In the present disclosure, the TCI state may be information (for example, the DL-RS, the QCL type, a cell in which the DL-RS is transmitted, or the like) related to a receive beam (spatial domain reception filter) indicated (configured) for the UE. The QCL assumption may be information (for example, the DL-RS, the QCL type, a cell in which the DL-RS is transmitted, or the like) related to a receive beam (spatial domain reception filter) that is assumed by the UE, based on transmission or reception of an associated signal (for example, a PRACH).

In the present disclosure, the moving object may be an object that moves at a given speed or higher, and may be, for example, a train, an automobile, a motorcycle, a ship, or the like. Communication between the UE included in the moving object and the transmission point (for example, the RRH) may be performed directly between the UE and the transmission point, or may be performed between the UE and the transmission point via the moving object (for example, an antenna installed in the moving object or the like).

### (First Aspect)

A first aspect will describe a case in which at least one of information related to a type of one or a plurality of RRHs (for example, transmission points) installed in a movement path and information related to transmit beams transmitted from the RRHs is reported to the UE (or the moving object including the UE).

### <Report of RRH Type>

A network (for example, a base station, or an RRH) may configure or report information related to the type of the RRH to the UE. The information related to the type of the RRH may be information specifying whether the RRH is a uni-directional RRH or a bi-directional RRH.

The information related to the type of the RRH may be reported to the UE, using at least one of higher layer signaling, MAC control information (for example, a MAC CE), and downlink control information. When at least one of the MAC control information and the downlink control information is used, each RRH type can be dynamically switched, and thus switch of beams can be flexibly performed depending on an environment (for example, an urban area, a rural area, and the like) in which the moving object passes.

The UE may determine the number of beams transmitted from each RRH based on the information related to the type of the RRH, and thereby control reception processing (for example, the number of beam sweeps, Doppler shift correction, and the like) of signals transmitted from the RRH. The UE may receive information related to a direction (for example, whether the direction is the same as the traveling direction or is opposite to the traveling direction) of a beam transmitted from the RRH. The information related to the direction of the beam may be reported to the UE in the information related to the type of the RRH, or may be reported to the UE separately from the information related to the type of the RRH.

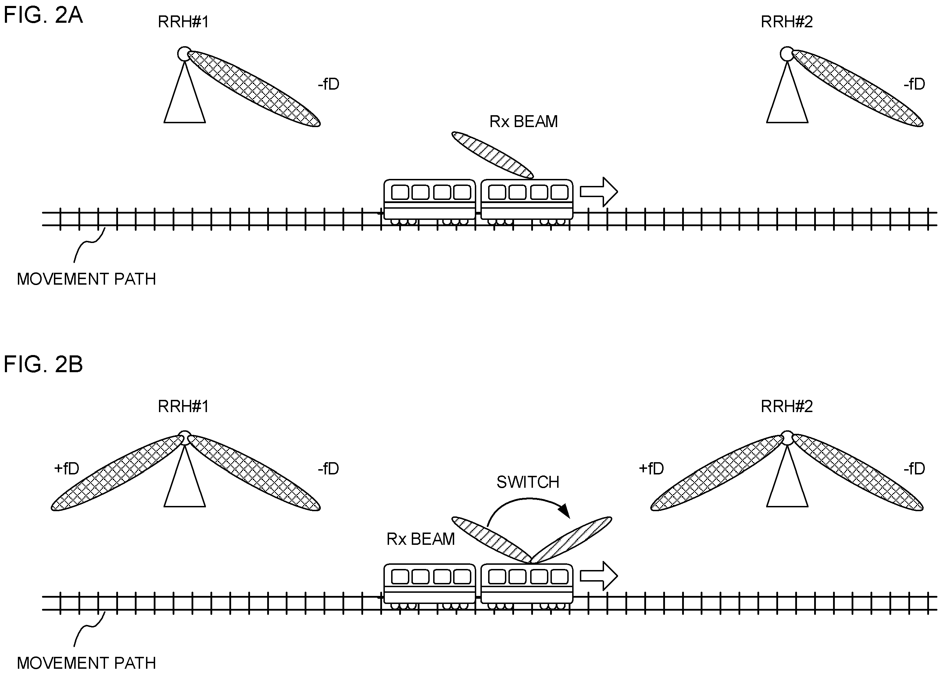

When the RRH is a uni-directional RRH, the UE may determine a receive beam used for reception, assuming only a beam from a single direction (see FIG. 2A). For example, when each RRH installed along the movement path is a uni-directional RRH that forms a transmit beam on the traveling direction side, the UE may form a receive beam in the opposite direction side to the traveling direction and perform the reception processing.

With this, determination of a receive beam can be simplified, and increase of the number of receive beams to be used can be prevented.

When the RRH is a bi-directional RRH, the UE may determine a receive beam used for reception, assuming beams from two directions (see FIG. 2B). For example, when each RRH installed along the movement path is a bi-directional RRH that forms a transmit beam on both of the traveling direction side and an opposite direction side to the traveling direction, the UE may form receive beams on both of the traveling direction side and the opposite direction side to the traveling direction to perform the reception processing.

A first receive beam in the opposite direction to the traveling direction and a second receive beam in the traveling direction may be simultaneously formed. Alternatively, the first receive beam and the second receive beam may be switched. For example, in the case shown in FIG. 2B, when received power of DL transmission transmitted from RRH #2 is larger than received power of DL transmission transmitted from RRH #1 or after a given timer has elapsed, the UE may switch from the first receive beam to the second receive beam.

With this, among the plurality of RRHs (for example, RRH #1 and RRH #2), transmit beams from both of the RRHs can be appropriately received. As a result, the RRH that receives DL transmission can also be appropriately switched.

### <Report of Number of Transmit Beams of RRH>

A network (for example, a base station, or an RRH) may configure or report information related to the transmit beam transmitted from the RRH (for example, information related to the number of transmit beams) to the UE. The information related to the transmit beam transmitted from the RRH may be information with which the number of transmit beams transmitted from each RRH can be identified, and may be, for example, information related to the number of TCI states.

The information related to the transmit beam transmitted from the RRH may be reported to the UE, using at least one of higher layer signaling, MAC control information, and downlink control information.

The UE may determine the number of beams transmitted from each RRH based on the information related to the transmit beam, and thereby control reception processing (for example, the number of beam sweeps, Doppler shift correction, and the like) of signals transmitted from the RRH. With this, the UE can limit the number of beam sweeps, and can thus promptly determine the receive beam.

### (Second Aspect)

A second aspect will describe a case in which information related to beam transition is reported to the UE (or the moving object including the UE).

The information related to beam transition may be at least one of information for identifying the order of beam transition (or a beam transition pattern) and information for identifying beam transition time.

### <Beam Transition Order>

A network (for example, a base station, or an RRH) may configure or report information related to the order of beam transition (or the beam transition pattern) to the UE. For the information related to the order of beam transition, at least one of a beam index, a TCI state index, a reference signal index, and a resource index may be used.

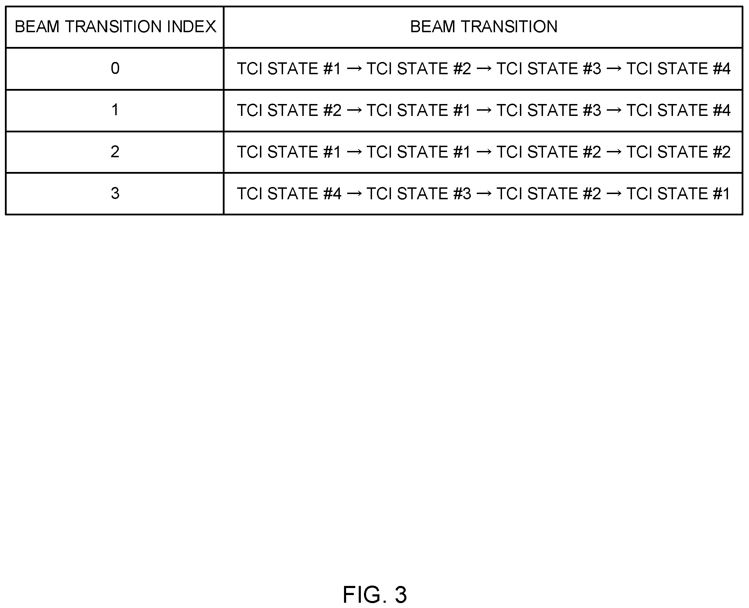

The information related to the order of beam transition may be reported to the UE, using at least one of higher layer signaling, MAC control information, and downlink control information. Alternatively, a plurality of candidates (or entries) may be reported using higher layer signaling, and a specific candidate may be reported to the UE using at least one of MAC control information and downlink control information (see FIG. 3).

FIG. 3 shows a case in which four candidates (beam transition indices #0 to #3) indicating the order of beam transition are configured for the UE using higher layer signaling, and one of beam transition indices #0 to #3 is specified using at least one of MAC control information and downlink control information.

Note that each of the beams to be transitioned (here, four TCI states) may respectively correspond to different RRHs, or at least two of each of the beams to be transitioned may correspond to the same RRH (RRH that transmits a plurality of beams). For example, in beam transition index #0, TCI states #1 and #2 may correspond to two beams respectively transmitted from one RRH, and TCI states #3 and #4 may correspond to beams transmitted from other RRHs.

Note that the number of beam candidate indices configured using the higher layer signaling is not limited to four. Here, a case in which beam transition is reported using the TCI states is shown. However, this is not restrictive.

The UE may determine the beams transmitted in the movement path (for example, beams transmitted from each RRH) based on the information related to the order of beam transition (or the beam transition pattern), and thereby control reception processing (for example, the number of beam sweeps, Doppler shift correction, and the like). With this, beam sweep can be performed with receive beams being appropriately formed.

### <Beam Transition Time>

A network (for example, a base station, or an RRH) may configure or report information related to beam transition time to the UE. The information related to beam transition time may be information indicating transition time of a beam (or dwell time of the beam). Regarding a certain beam, the UE may determine that a beam transmitted from the RRH transitions, based on the beam transition time.

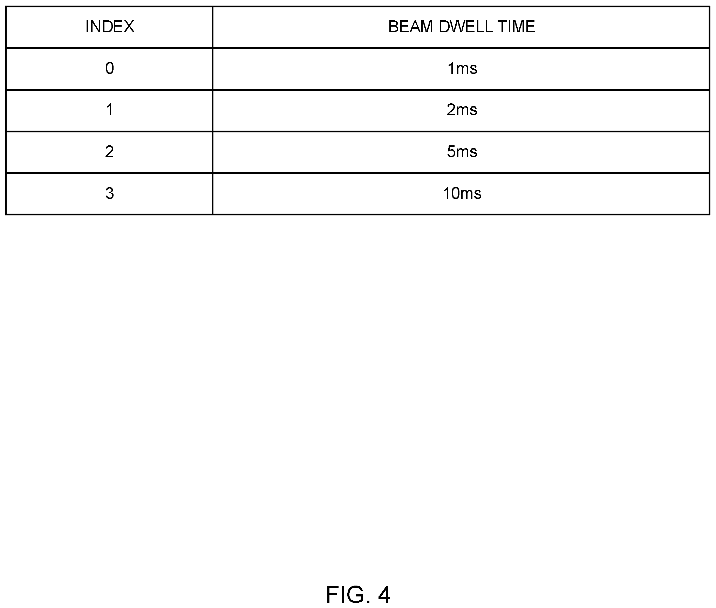

The transition time of a beam (or the beam dwell time) may be separately configured for each beam (configured for each beam). For example, a plurality of candidates (or entries) may be reported as the beam transition time or the beam dwell time using higher layer signaling, and a specific candidate may be reported to the UE using at least one of MAC control information and downlink control information (see FIG. 4).

FIG. 4 shows a case in which four candidates indicating the beam dwell time are configured for the UE using higher layer signaling, and specific beam dwell time is specified using at least one of MAC control information and downlink control information. The number of candidates for the beam dwell time configured using the higher layer signaling is not limited to four.

Alternatively, the transition time of a beam may be configured to a common or the same value in a plurality of beams (for example, all of the beams) or a plurality of RRHs (or all of the RRHs).

The UE may control the reception processing (for example, the number of beam sweeps, receive beam forming, and the like), based on the information related to the transition time of a beam.

The UE may control reception operation that is based on the information related to the transition time of a beam, based on a moving speed of the terminal itself. For example, when the moving speed of the UE is a given speed (or the moving speed is within a given range), the reception operation may be controlled based on the transition time of a received beam.

In contrast, when the moving speed of the UE is not a given speed (or is not out of the given range), there is a possibility that beam change may not be appropriately performed. For example, when a certain DL reference signal is measured and received power or received quality is a given value or less, it may be determined that beam change is not appropriately performed. In such a case, the UE may use (for example, fallback) operation of the existing system (for example, Rel. 15).

The operation of the existing system may be operation in which measurement and report of at least one of L1-RSRP and L1-SINR are performed and the TCI state reported from the network is assumed, or a receive beam of a synchronization signal block (SSB) index corresponding to a PRACH occasion at the time of the latest (for example, the most recent) PRACH transmission is assumed.

### <Variations>

The transition time of a beam or the dwell time of a beam may be defined, configured, or reported depending on the moving speed of the UE.

For example, the beam transition time may be configured according to a function of the moving speed of the UE. The transition time of a beam may be uniquely determined according to the function corresponding to the moving speed of the UE, or, as shown in FIG. 4, a value configured or reported from the network may be converted or changed depending on the moving speed.

The moving speed of the UE may be determined by the UE measuring a certain DL reference signal, or may be reported from the network (for example, a base station) to the UE. The certain DL reference signal may be, for example, a TRS, and a new or dedicated TRS configured for the HST.

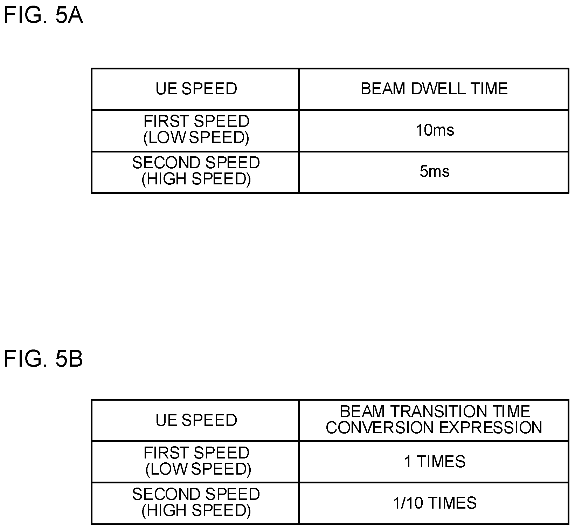

For example, with the UE measuring the certain DL reference signal, the transition time of a beam may be determined based on a value estimated in a plurality of stages or in a plurality of levels (for example, two stages of a high speed and a low speed) (see FIG. 5A).

In FIG. 5A, when the speed of the UE is a first speed (for example, a low speed) equal to or lower than a given value, it is determined that the beam dwell time is 10 ms. FIG. 5A shows a case in which, when the speed of the UE is a second speed (for example, a high speed) higher than the given value, by contrast, it is determined that the beam dwell time is 5 ms. With this, the beam dwell time can be flexibly changed depending on the speed of the UE.

Alternatively, with the UE measuring the certain DL reference signal, a function (or a mathematical expression) used for identifying the transition time of a beam may be determined based on a value estimated in a plurality of stages or in a plurality of levels (for example, two stages of a high speed and a low speed) (see FIG. 5B).

In FIG. 5B, when the speed of the UE is the first speed (for example, the low speed) equal to or lower than the given value, the beam dwell time (for example, see FIG. 4) configured or reported from the network is applied. In contrast, when the speed of the UE is the second speed (for example, the high speed) higher than the given value, a value that is 1/10 of the beam dwell time configured or reported from the network is applied. With this, the beam dwell time can be flexibly changed depending on the speed of the UE.

Note that FIG. 5A and FIG. 5B show a case in which the UE speed is separated into two stages (or two levels); however, the UE speed may be separated into three or more stages and a beam dwell time or beam transition time conversion expression may be configured.

In this manner, by changing the beam dwell time depending on the UE speed, the UE can apply appropriate beam transition time even when the moving speed of the UE is not the given speed (or the moving speed is not within the given range).

### (Third Aspect)

A third aspect will describe a case in which the information related to beam transition is reported to the UE (or the moving object including the UE) per certain unit.

The information related to beam transition may be at least one of information for identifying the order of beam transition (or the beam transition pattern) and information for identifying the beam transition time (or the beam dwell time).

The order of beam transition and the beam transition time may be reported to the UE for each base station (for example, cell ID, physical cell ID (PCID)). In this case, the dwell time of each beam may be reported for each beam, or the dwell time per beam may be reported. For example, when a plurality of beams are transmitted from one RRH, the dwell time may be separately configured for each beam, and the same dwell time may be configured for a plurality of beams.

When the same cell ID is configured for a plurality of RRHs, each of the beam transition pattern and the beam transition time may be reported for each RRH. In such a case, a different ID (for example, an ID for RRH identification) may be configured for each RRH (for example, the RRHs having the same cell ID). Information (for example, an RRH pattern and the dwell time of each RRH) related to the RRHs having the same cell ID may be reported to the UE.

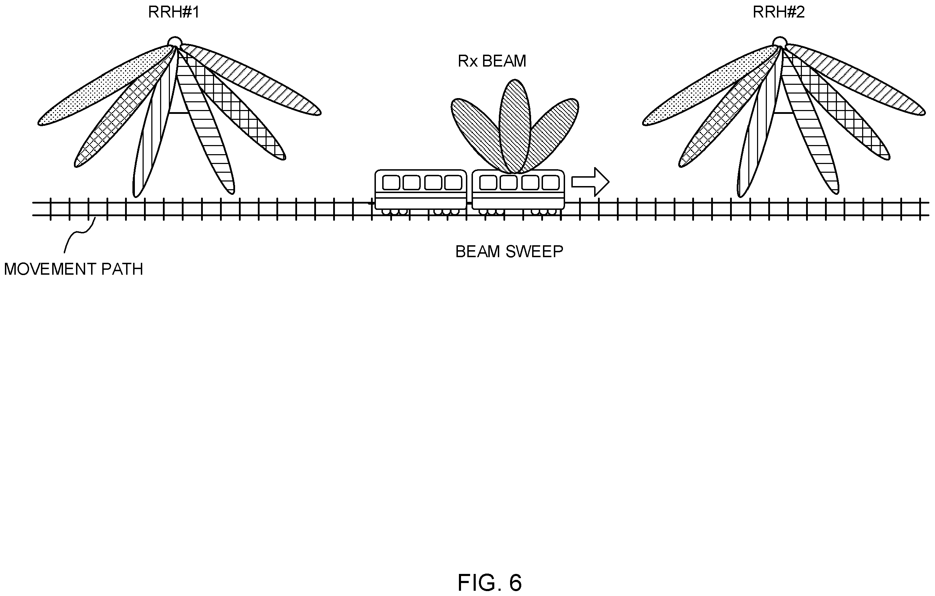

Alternatively, when the same cell ID is configured for a plurality of RRHs, the same beam transition pattern may be repeated for each RRH (see FIG. 6). FIG. 6 shows a case in which RRH #1 and RRH #2 have the same cell ID. In such a case, the dwell time of each RRH (or the dwell time of the cell ID and the number of RRHs) may be reported to the UE. The UE may control the reception processing, assuming that the same beam transition pattern and dwell time are applied to RRH #1 and RRH #2.

With which RRH the UE is connected may be determined by the UE by counting time after handover, or an identification signal may be transmitted for each RRH. The identification signal may be reported to the UE as an information bit.

Alternatively, transmission parameters of a transmission signal, such as time, a frequency, a sequence, and a cyclic shift, may be associated with a certain RRH. In this case, the UE can determine the RRH, based on the parameters of the transmission signal. With the UE recognizing the beam currently used by the RRH, an appropriate receive beam can be promptly identified.

### <Variations>

In the above configuration, the beam transition time may be configured with absolute time. Alternatively, the beam transition time may be derived from the moving speed of the UE.

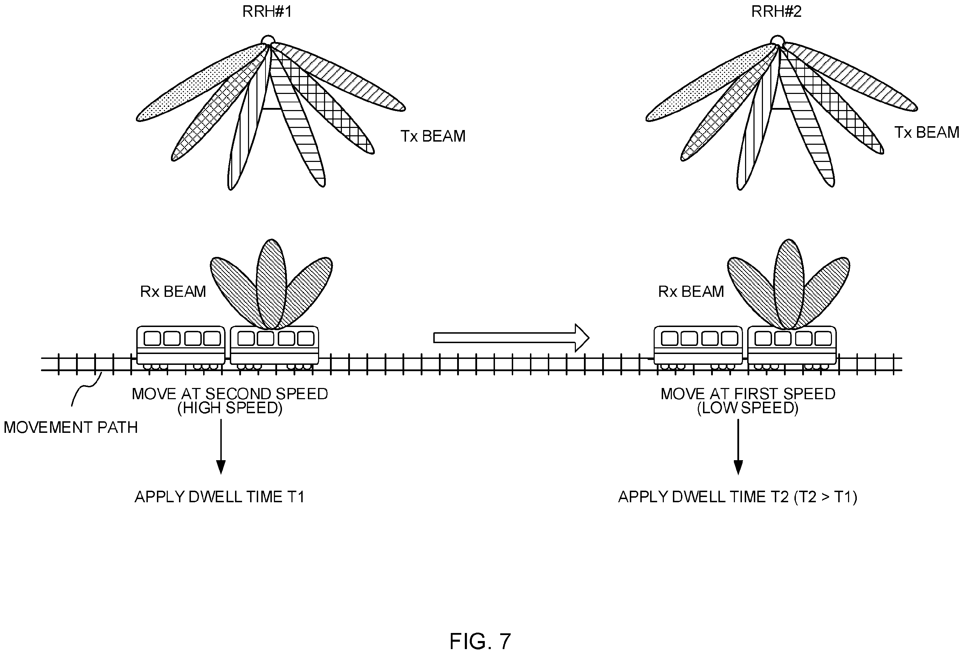

When the beam transition time is derived from the moving speed of the UE, values respectively corresponding to a plurality of levels (for example, two stages of a high speed and a low speed) may be reported, or a function (or a mathematical expression) corresponding to the moving speed of the UE may be defined (see FIG. 7).

FIG. 7 shows a case in which dwell time T1 is applied when the UE speed is the second speed (high speed) higher than a given value and dwell time T2 (T2 > T1) is applied when the UE speed is the first speed (low speed) equal to or lower than the given value. For example, it is assumed that the UE (or the moving object) moves at the second speed in a straight section, a rural area (or the countryside), a tunnel, or the like, and moves at the first speed near a station, at a curve, or the like, and thus the beam dwell time or the RRH dwell time may be flexibly controlled depending on the UE speed.

Alternatively, intervals between the RRHs (or the base stations) and the number of beams in each RRH may be reported to the UE, and the UE may determine at least one of the dwell time corresponding to each RRH and the dwell time of each beam, based on information reported to the UE.

The UE speed (or the moving object speed) may be determined by the UE, based on reception of a reference signal (for example, a TRS or the like). Alternatively, the UE may apply the UE speed from the current position, assuming that the UE moves at a given operating speed. The UE may determine the current position of the terminal itself based on the GPS or the like, or may determine the current position based on train operation information. Alternatively, the UE may determine the current position by counting time after handing over each RRH (or base station).

### (Fourth Aspect)

A fourth aspect will describe a case in which the control shown in the first aspect to the third aspect described above is applied.

The UE may perform control so as to carry out the application when at least one given condition of the first aspect to the third aspect described above (for example, control for HST) is satisfied and not to carry out the application when the given condition is not satisfied. For example, when the given condition is not satisfied, the UE may perform control so as to fall back to the operation of the existing system (for example, Rel. 15) and operation of a normal mode of future systems (for example, Rel. 16 and later versions).

The given condition may be configured or reported from the network to the UE, using higher layer signaling. The UE may report whether or not a specific condition is satisfied to the network, using UE capability information (for example, UE capability).

Note that the given condition may be at least one of the following, for example.
- The UE moving speed has a given value (for example, X₁ km/h) or higher
- The Doppler shift has a given value or higher
- A specific area
- Time before a specific receive beam changes by X₂ dB is within given time
- Time in which the best beam (for example, a beam having the maximum RSRP and SINR) changes is within given time

The specific area may be at least one of an area distant from a station by a given value or more, an area in a tunnel, an area in which GBS cannot be received, an area in which a specific DL reference signal (for example, an SSB or the like) cannot be received, and an area in which received power or received quality has a given value or less. The values of X₁ and X₂ may be defined in a specification in advance, or may be reported from the network to the UE using higher layer signaling or the like.

In this manner, by determining whether or not the control shown in the first aspect to the third aspect is applied depending on whether or not a communication environment or a transmission and reception environment satisfies a given condition, UE operation can be controlled depending on the communication environment.

### (Variations)

The moving object (or the UE included in the moving object) may report information related to at least one of received power and received quality of a neighboring cell to the network. The information related to at least one of received power and received quality may be L1-RSRP or L1-SINR.

The UE may report the information related to at least one of received power and received quality of a neighboring cell to the network as a part of beam report or a part of measurement report.

The UE may report information related to a higher beam (for example, a beam having high received power) of a cell served by the UE itself (or a serving cell) and information related to a higher beam of another cell (or a handover target cell).

For example, the UE may report the information related to the higher beam of the cell served by the UE itself (for example, beam #1: 30 dBm, beam #2: 20 dBm) and the information related to the higher beam of another cell (for example, beam #5: 10 dBm, beam #4: 5 dBm), using different uplink control information fields (for example, UCI fields), respectively.

Alternatively, the UE may report the information related to the higher beam of another cell on the information related to the higher beam of the cell served by the UE itself (for example, beam #1 of the cell served by the UE itself: 30 dBm (another cell beam #1: 5 dBm), beam #2 of the cell served by the UE itself: 20 dBm (another cell beam #2: 3 dBm)).

In this manner, by reporting the L1-RSRP, the L1-SINR, or the like of the neighboring cell, whether or not there is handover and a beam of a handover target can be rapidly determined.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

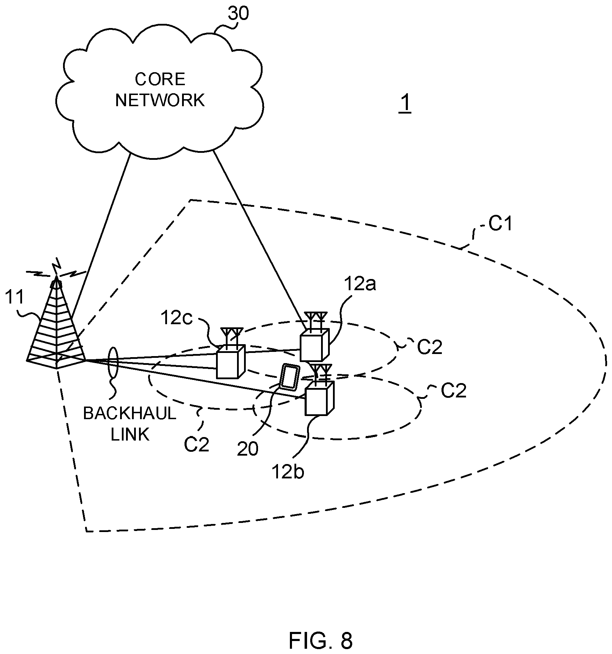

FIG. 8 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations (for example, RRHs) 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

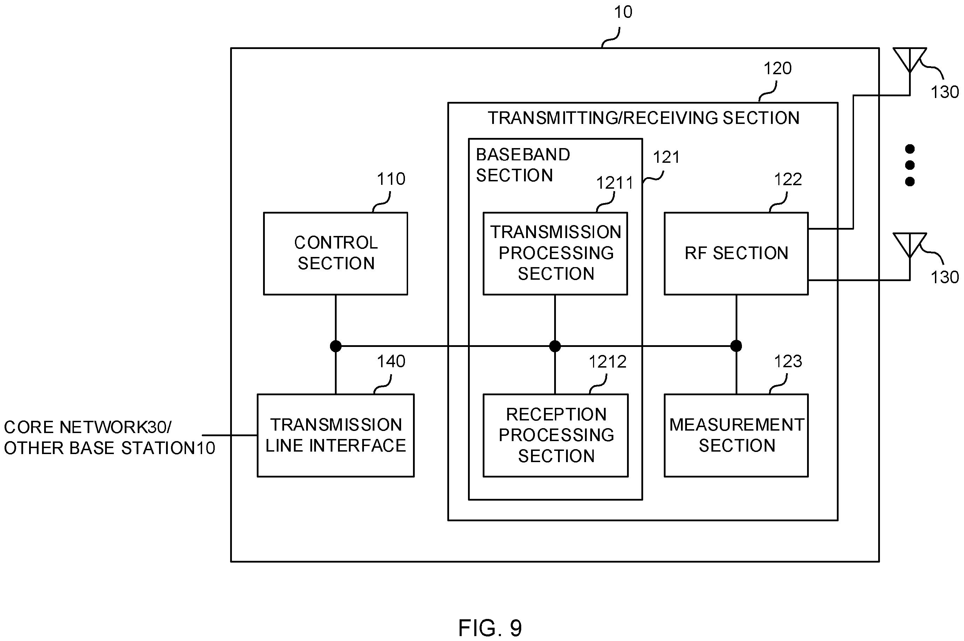

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource assignment, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of information related to a type of one or more transmission points (for example, RRHs or base stations) installed in a movement path and information related to a transmit beam transmitted from the transmission point(s).

The control section 110 may control configuration or report of order of beam transition (or a beam transition pattern) and beam transition time (or beam dwell time) for a moving object (or a UE included in the moving object).

### (User Terminal)

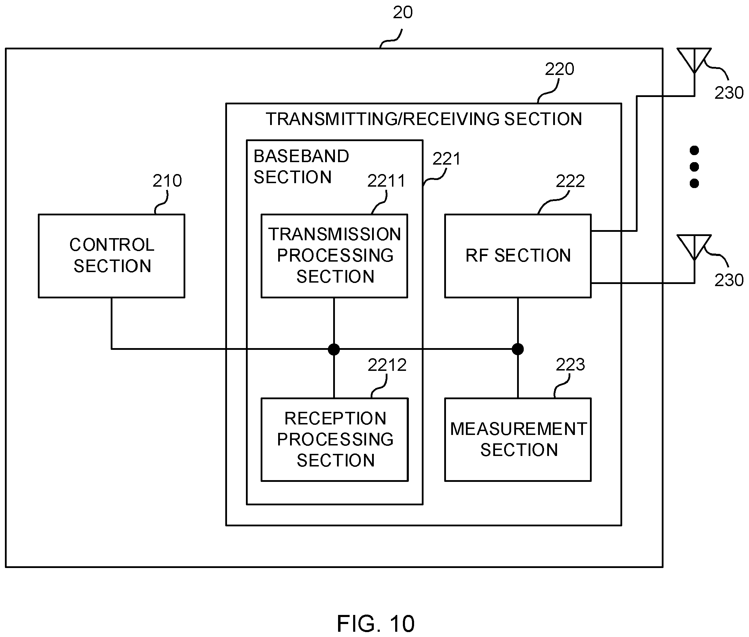

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of information related to a type of one or more transmission points (for example, RRHs or base stations) installed in a movement path and information related to a transmit beam transmitted from the transmission point(s).

The information related to the transmit beam may be information related to the number of beams transmitted from each of the transmission points. Alternatively, the information related to the transmit beam may be information related to at least one of order of beam transition and beam transition time. Alternatively, the information related to at least one of the order of the beam transition and the beam transition time may be configured to be common to a plurality of transmission points corresponding to the same cell ID.

The control section 210 controls reception of DL transmission transmitted from each of the transmission points, based on the information being received. For example, the control section 210 may determine the beam transition time, based on a moving speed of a terminal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

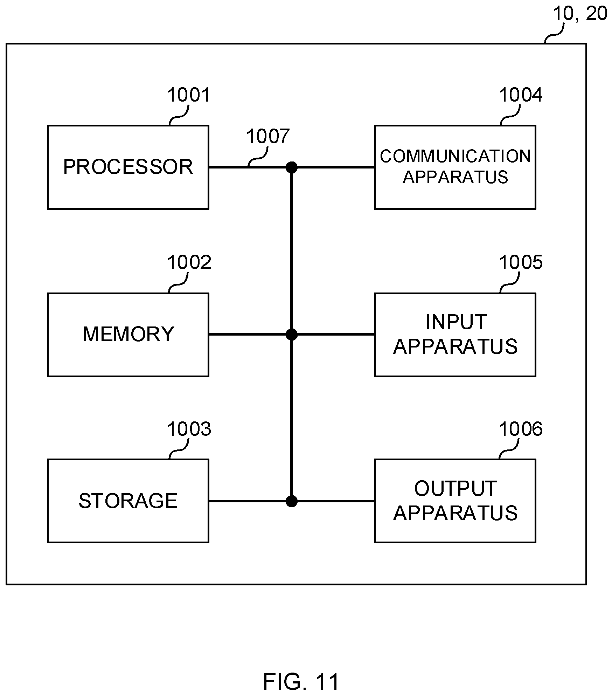

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the assignment of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource assignment in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a certain carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names assigned to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives at least one of information related to a type of one or more transmission points installed in a movement path and information related to a transmit beam transmitted from the one or more transmission points; and
a control section that controls reception of DL transmission transmitted from each of the one or more transmission points, based on the information being received.

2. The terminal according to claim 1, wherein
the information related to the transmit beam is information related to number of beams transmitted from each of the one or more transmission points.

3. The terminal according to claim 1 or 2, wherein
the information related to the transmit beam is information related to at least one of order of beam transition and beam transition time.

4. The terminal according to claim 3, wherein
the information related to at least one of the order of the beam transition and the beam transition time is configured to be common to a plurality of transmission points corresponding to a same cell ID.

5. The terminal according to claim 3 or 4, wherein
the control section determines the beam transition time, based on a moving speed of the terminal.

6. A radio communication method comprising:
receiving at least one of information related to a type of one or more transmission points installed in a movement path and information related to a transmit beam transmitted from the one or more transmission points; and
controlling reception of DL transmission transmitted from each of the one or more transmission points, based on the information being received.
